## Europäisches Patentamt
## European Patent Office
## Office européen des brevets

(19)

(11) Numéro de publication: **0 143 674**
**B1**

(12)
# FASCICULE DE BREVET EUROPÉEN

(45) Date de publication du fascicule du brevet:
23.09.87

(51) Int. Cl.⁴: **F 02 C 9/30,** F 04 C 15/04

(21) Numéro de dépôt: **84401727.7**

(22) Date de dépôt: **29.08.84**

(54) Procédé et dispositif pour réduire l'auto-échauffement d'un circuit de carburant de turbomachine.

(30) Priorité: **07.09.83 FR 8314248**

(43) Date de publication de la demande:
**05.06.85 Bulletin 85/23**

(45) Mention de la délivrance du brevet:
**23.09.87 Bulletin 87/39**

(84) Etats contractants désignés:
**DE FR GB**

(56) Documents cité:
**FR-A-1 591 463**
**GB-A-393 791**
**GB-A-741 442**
**GB-A-1 081 711**
**US-A-4 332 527**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Mouton, Pierre, Charles, 19, rue de la Mare aux Moines, F-91350 Grigny (FR)**

(74) Mandataire: **Moinat, François, S.N.E.C.M.A. Service des Brevets Boîte Postale 81, F-91003 Evry Cedex (FR)**

EP 0 143 674 B1

LIBER, STOCKHOLM 1987

## Description

L'invention concerne un circuit de carburant de turbomachine, comprenant une canalisation de recirculation d'une pompe volumétrique, et utilisé notamment dans les matériels aéronautiques tels que des turboréacteurs.

Une des caractéristiques des turbomachines double corps (particulièrement des double flux à fort taux de dilution) est d'avoir des consommations de carburant très faibles aux régimes partiels de la turbomachine en altitude et notamment au ralenti. Les régimes partiels et notamment le ralenti en altitude correspondent à des vitesses de rotation élevées très proches du régime maximum, ce qui implique pour une pompe volumétrique entraînée directement un régime de rotation élevé de la pompe. Les consommations au contraire sont relativement élevées pour les faibles régimes d'auto-rotation (causés par l'obstruction du corps haute pression par le corps basse pression) pour lesquels le réallumage doit être également possible.

Cette dernière caractéristique est généralement le critère dimensionnant pour la cylindrée de la pompe à carburant, supposée volumétrique, à cylindrée fixe et entraînée mécaniquement à partir du régime haute pression du réacteur, ce dimensionnement important conduit à son tour à de très forts taux de recirculation du carburant provenant du refoulement de la pompe à son entrée, responsables d'échauffements importants, au régime de ralenti en altitude.

Une des solutions à ce problème décrite dans le brevet français FR-A-2 232 956 au nom de la Demanderesse, réside dans l'emploi d'une pompe volumétrique à cylindrée variable. Malheureusement, ce type de pompe se révèle complexe, comparée à la simplicité et à la sécurité de fonctionnement d'une pompe à cylindrée fixe, particulièrement d'une pompe à engrenages.

Le but de l'invention est de réunir dans une pompe de carburant les avantages de robustesse et de fiabilité d'une pompe volumétrique à cylindrée fixe à la souplesse d'utilisation d'une pompe volumétrique à cylindrée variable.

Ce but est atteint selon l'invention par un procédé et un dispositif permettant de provoquer une cavitation de la pompe, lorsque l'un des seuils de température du carburant dans le circuit et de pression dans la canalisation de recirculation est atteint.

Il est ainsi possible de faire fonctionner une pompe volumétrique à cylindrée fixe à la manière d'une pompe à cylindrée variable, la variation du débit refoulé étant réalisée par réduction du remplissage de la denture dans le bassin d'alimentation.

Le contrôle du remplissage de l'espace interdents de la pompe à engrenages (ou inter-palettes d'une pompe à palettes) est réalisé par modulation de la pression de gavage de la pompe, ce qui permet de régler son taux de cavitation.

La capacité d'une pompe à engrenage à fonctionner d'une manière continue et stable avec des pressions de gavage réduites, a été démontrée. La progressivité de la chute de débit avec la chute de pression de gavage est d'autant plus douce et stable que la denture est peu large et d'un grand diamètre (de manière à atteindre de grandes vitesses périphériques en bout de dent).

Par ailleurs, on évitera l'emploi de paliers du type hydrodynamique, la qualité du film fluide pouvant souffrir du fonctionnement en cavitation.

L'emploi de paliers classiques à roulements et de rotors à jeux fixes minorisera les pertes de rendement.

Ce régime de fonctionnement en cavitation est tel que la surpression du carburant au-dessus de sa tension de vapeur dans le bassin d'alimentation est insuffisante pour accélérer le fluide assez vite pour lui permettre de remplir entièrement la cavité générée par le déplacement de la denture.

La perte de remplissage liquide commence par l'extrémité de dent (où la pression dynamique que devrait acquérir le fluide pour suivre la dent est supérieure à sa surpression disponible par rapport à la tension de vapeur], et se poursuit vers le creux de dent ou la vitesse tangentielle est plus faible au fur et à mesure que la pression de gavage décroît.

L'effet énergétique de la cavitation de la pompe volumétrique conduit à une réduction de la puissance sur l'arbre de la pompe proportionnelle à la chute de débit.

Ceci fait que pour les consommations très faibles aux régimes partiels élevées en altitude la réduction relative d'échauffement de la boucle de recirculation par rapport à la même pompe correctement gavée, est environ égale à la réduction relative, causée par la cavitation, du débit délivré par la pompe. Des réductions de débit délivré de plus de 50 % ont été démontrées, ce qui confirme la possibilité de réduire l'échauffement de moitié.

Malgré tout, il est connu que le fonctionnement en cavitation d'une pompe volumétrique provoque des usures qui réduisent sa durée de vie; en conséquence, l'utilisation de la cavitation comme moyen de réduire l'auto-échauffement du carburant doit être limitée aux conditions extrêmes qui, heureusement, sont peu fréquentes ou transitoires), où le taux de recirculation du carburant atteindrait des valeurs très importantes si on n'employait pas la solution objet de la présente invention.

L'intérêt d'un tel moyen cependant reste important, ces cas extrêmes de fonctionnement étant très souvent les cas qui imposent le dimensionnement du matériel.

La réalisation d'un circuit de carburant mettant en oeuvre la cavitation comme moyen de réduction de l'échauffement du carburant peut comprendre un arrangement classique incluant une soupape régulatrice du type "By-pass" de section maximum telle qu'elle soit incapable d'assurer l'évacuation de l'excédent de carburant pompé pour les cas extrêmes de recirculation.

Lorsque la saturation en ouverture de cette soupape régulatrice est atteinte, commence l'action d'une deuxième soupape régulatrice associée, travaillant en restriction, en amont de la pompe volumétrique haute pression. Cette deuxième soupape régulatrice module la pression de gavage de la pompe haute pression et par cela le régime de cavitation de celle-ci.

L'invention sera mieux comprise grâce à la description suivante d'un mode particulier de réalisation de l'invention. Il est fait référence aux dessins annexés sur lesquels:

- la figure 1 est un schéma d'une partie d'un circuit de recirculation de carburant doté conformément à l'invention d'un dispositif de modulation de la pression de gavage de la pompe volumétrique;

- les figures 2A et 2B montrent sur un même graphique donnant le débit Q de la pompe en fonction de sa pression de gavage $P_g$, deux points de fonctionnement de la pompe; un point en régime normal sur la figure $2_A$, et un point en régime de cavitation sur la figure $2_B$.

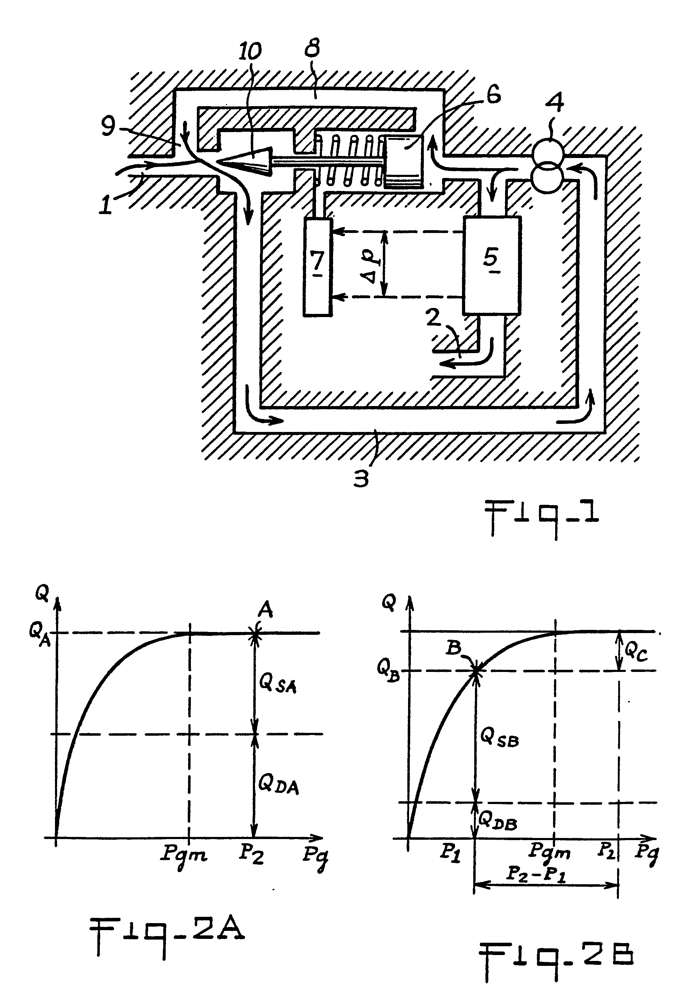

La figure 1 montre une partie d'un circuit de carburant comprise entre le refoulement 1 d'une pompe basse pression, à l'aval de cette pompe, le départ 2 d'un circuit utilisateur, en amont de ce circuit utilisateur.

Le circuit comprend une canalisation 3 d'alimentation d'une pompe volumétrique haute pression 4 alimentant un doseur 5. Une soupape régulatrice à saturation 6, commandée par un détecteur 7 de la perte de charge dans le doseur 5, est placée sur une canalisation 8 de recirculation établie entre le refoulement de la pompe 4 et un point amont 9 de l'alimentation 1-3.

Selon l'invention, une soupape à restriction 10 est interposée entre le point amont 9 et la pompe 4. Dans cet exemple de réalisation, elle est commandée directement par la soupape 6 de façon à réduire la pression de gavage de ladite pompe quand la saturation de la soupape 6 est atteinte.

Le dimensionnement de la soupape 6 et de la soupape 10 est tel que l'action de la réduction de la pression de gavage de la pompe volumétrique 4 ne commence que lorsque la soupape 6 atteint son ouverture maximum, c'est-à-dire, pour les cas transitoires et/ou très rares de très faibles consommations à régime de rotation élevée. Le caractère très rare et/ou transitoire de cette réduction de pression de gavage entraînant la cavitation de la pompe ne provoque qu'une détérioration très lente de la pompe 4, généralement acceptable du fait qu'elle correspond à la durée de vie normale des pompes.

Les figures 2A et 2B illustrent le fonctionnement de la pompe pour une vitesse de rotation constante selon qu'il y a cavitation (figure 2B) ou non (figure 2A). Les deux figures montrent la courbe des points de fonctionnement de la pompe, donnant son débit Q en fonction de la pression de gavage $P_g$.

On voit que ce débit est pratiquement constant et maximum au-delà d'une pression de gavage minimum $P_{gm}$, mais qu'en deçà de cette pression minimum, il y a cavitation et le débit chute.

Le fonctionnement normal est représenté sur la figure 2A par le point A situé sur la partie pratiquement constante de la courbe et correspondant à une valeur $P_2$ de la pression de gavage $P_g$. Le débit $Q_A$ de la pompe est égal à la somme des débits $Q_{DA}$ du doseur 5 et $Q_{SA}$ de la soupape 6 non saturée.

Lorsque (figure 2B) en un point de fonctionnement de la pompe représenté par B sur la courbe et correspondant à une valeur $P_1$ de la pression de gavage $P_g$, le débit du doseur 5 diminue et devient $Q_{DB}$, et que la soupape 6 arrive à son débit de saturation $Q_{SB}$, le débit de la pompe $Q_B = Q_{SB} + Q_{SB}$ est inférieur au débit nominal $Q_A$ d'une valeur $Q_C$ due à la cavitation produite par la reduction $(P_2 - P_1)$ de la pression de gavage $P_g$.

Selon un autre mode de réalisation on ne prend plus la position de la soupape régulatrice 6 comme indication d'un échauffement important mais on déclenche l'action de cavitation de la pompe volumétrique 4 à partir d'une mesure réelle de la température carburant dans le circuit, grâce à un capteur non représenté.

Cette méthode permet ainsi d'éviter la cavitation de la pompe pour les cas où le réservoir de carburant étant froid, un échauffement important du circuit carburant moteur ne conduit pas à une température prohibitive. Dans ce cas, la soupape régulatrice 6 n'a pas à fonctionner en saturation, la soupape à restriction étant commandée par un thermostat.

La sécurité contre la cavitation complète de la pompe haute pression 4 en cas de fermeture trop importante de la soupape à restriction est donné par examen de tous les cas de vol, en s'assurant que dans aucun cas, la soupape à restriction n'aura à réduire le débit volumétrique de la pompe 4 de plus de k%, k pouvant atteindre 50 % sans risque de désamorçage.

## Revendications

1. Procédé pour réduire l'auto-échauffement d'un circuit de carburant de turbomachine, circuit comprenant une canalisation de recirculation (8) d'une pompe volumétrique (4), caractérisé en ce qu'on provoque une cavitation de lla pompe (4), déclenchée à partir d'un seuil de valeur de carburant dans le circuit et la pression de carburant dans la canalisation de recirculation (8).

2. Procédé selon la revendication 1, caractérisé en ce qu'on règle le taux de cavitation en modulant la pression de gavage de la pompe (4).

3. Dispositif pour réduire l'auto-échauffement d'un circuit de carburant de turbomachine, circuit comprenant une canalisation de recirculation (8) d'une pompe volumétrique (4), caractérisé en ce qu'il comprend des moyens (10) pour provoquer la cavitation de la pompe (4), moyens (10) commandés par un des moyens de commande comprenant un moyen de mesure de la température réelle du carburant dans le circuit et un moyen (6) réagissant à la pression de carburant dans la canalisation de recirculation (8).

4. Dispositif selon la revendication 3, caractérisé en ce que lesdits moyens comprennent un dispositif de modulation (10) de la pression de gavage de la pompe (4).

5. Dispositif selon la revendication 4, caractérisé en ce que le dispositif de modulation est une soupape à restriction (10) disposée en amont de la pompe volumétrique (4).

6. Dispositif selon la revendication 5, caractérisé en ce qu'il comprend une soupape régulatrice à saturation (6) placée sur la canalisation de recirculation (8) et commandant la soupape à restriction (10).

7. Dispositif selon l'une quelconque des revendications 3 à 5, caractérisé en ce que les moyens (10) pour provoquer la cavitation de la pompe sont déclenchés par un capteur de température du carburant.

**Patentansprüche**

1. Verfahren zur Verringerung der Selbsterwärmung eines Turbomaschinen-Kraftstoffkreises, der einen Rückführkanal (8) einer Verdrängerpumpe (4) umfaßt, dadurch gekennzeichnet, daß man einen Hohlsog der Pumpe (4) hervorruft, der dann ausgelöst wird, wenn einer der beiden Parameter, die von der tatsächlichen Kraftstoff-Temperatur in dem Kraftstoffkreis und dem Kraftstoff-Druck in dem Rückführkanal (8) gebildet sind, einen Schwellenwert erreicht.

2. Verfahren nach Anspruch 1, dadurch gekennzeichnet, daß man die Größe des Hohlsogs durch Beeinflussung des Aufladedrucks der Pumpe (4) reguliert.

3. Vorrichtung zur Verringerung der Selbsterwärmung eines Turbomaschinen-Kraftstoffkreises, der einen Rückführkanal (8) einer Verdrängerpumpe (4) umfaßt, gekennzeichnet durch Mittel (10), die einen Hohlsog der Pumpe (4) hervorrufen und die von Steuermitteln gesteuert werden, die eine Einrichtung zur Messung der tatsächlichen Kraftstoff-Temperatur in dem Kraftstoffkreis sowie eine auf Kraftstoff-Druck in dem Rückführkanal (8) reagierende Einrichtung umfassen.

4. Vorrichtung nach Anspruch 3, dadurch gekennzeichnet, daß die genannten Mittel eine Einrichtung (10) zur Beeinflussung des Aufladedrucks der Pumpe (4) umfassen.

5. Vorrichtung nach Anspruch 4, dadurch gekennzeichnet, daß die Einrichtung zur Beeinflussung des Aufladedrucks ein stromaufwärts der Verdrängerpumpe (4) angeordnetes Drosselventil (10) ist.

6. Vorrichtung nach Anspruch 5, dadurch gekennzeichnet, daß in dem Rückführkanal (8) ein Sättigungsregelventil (6) angeordnet ist, das das Drosselventil (10) steuert.

7. Vorrichtung nach einem der Ansprüche 3 bis 6, dadurch gekennzeichnet, daß die Mittel (10), die den Hohlsog der Pumpe (4) hervorrufen, durch einen Sensor für die Kraftstoff-Temperatur ausgelöst werden.

**Claims**

1. Method for reducing the self-heating of a fuel circuit of a turbo machine, the circuit comprising recirculation piping (8) of a volumetric pump (4), characterized in this that cavitation in the pump (4) is encouraged, which is initiated at a threshold value of one of two parameters which are the actual temperature of the fuel in the circuit and the fuel pressure in the recirculation piping (8).

2. Method according to claim 1, characterized in that the degree of cavitation is controlled by modulating the back pressure on the pump (4).

3. Device for the reduction of self-heating in the fuel circuit of a turbo machine, the circuit comprising recirculation piping (8) of a volumetric pump (4), characterized in that it comprises means (10) for causing cavitation in the pump (4), means (10) controlled by one of the control means comprising means for measuring the actual temperature of the fuel in the circuit and a means (6) reacting to the pressure of the fuel in the recirculation piping (8).

4. Device according to claim 3, characterized in that the said means comprise a device (10) for modulating the back pressure on the pump (4).

5. Device according to claim 4, characterized in that the modulating device is a choke valve (10) disposed upstream of the volumetric pump (4).

6. Device according to claim 5, characterized in that it comprises a saturation regulating valve (6) located in the recirculation piping (8) and controlling the choke valve (10).

7. Device according to any one of claims 3 to 5, characterized in that the means (10) for causing the cavitation in the pump are activated by a fuel temperature sensor.

Fig-1

Fig-2A

Fig-2B